# NEW EUROPEAN PATENT SPECIFICATION

(11) **EP 0 420 613 B2**
(45) Date of publication and mention of the opposition decision: **03.01.2001**
(45) Mention of the grant of the patent: 05.02.1997
(21) Application number: 90310536.9
(22) Date of filing: 26.09.1990
(51) Int. Cl.: G06K 19/14, G06K 7/12

(54) **Data-written medium**
Schriftdatenträger
Support de données écrites

(30) Priority: 26.09.1989 JP 25017489; 08.12.1989 JP 31768289
(43) Date of publication of application: 03.04.1991
(73) Proprietor: TOYO INK MANUFACTURING CO., LTD., Tokyo (JP)
(72) Inventor: Hanada, Koji, c/o Toyo Ink Manufact. Co., Ltd., Chuo-ku, Tokyo (JP); Hamuro, Makiko, c/o Toyo Ink Manufact. Co., Ltd., Chuo-ku, Tokyo (JP); Yoshikawa, Takeshi, Toyo Ink Manufact. Co., Ltd., Chuo-ku, Tokyo (JP); Ohmura, Toru, c/o Toyo Ink Manufact. Co., Ltd., Chuo-ku, Tokyo (JP); Kashioka, Motohiko, Toyo Ink Manufact. Co., Ltd., Chuo-ku, Tokyo (JP)
(74) Representative: Woods, Geoffrey Corlett

(56) References cited:
- DE-A- 2 654 208
- FR-A- 1 570 578
- GB-A- 1 534 403
- JP-A- 58 134 782
- US-A- 4 626 445
- US-A- 4 753 923
- PATENT ABSTRACTS OF JAPAN 17 May 1988

## Description

This invention relates to a data-written medium having a variety of colors, whose data can be read with a light source having a main wavelength of 600 to 700 nm. More specifically, it relates to a bright-color data-written medium whose data can be read with a light source having a main wavelength of 600 to 700 nm and which is functionally excellent in prevention of falsification and forgery.

Various attempts are conventionally under way in order to prevent falsification and forgery and to improve means of collation for identification or withstandability of written data to environments with regard to a prepaid card, credit card, bank card, I.D. card, driver's licence, ticket, admission ticket, membership card, security card, ticket, certificate and the like. That is, these attempts are being made with single use or combined use of a processing means such as printing, engraving, laser-processing, discharging, laminating or vapor-depositing, afunctional material such as a magnetic material, electrically conductive material, photosensitive material, heat-sensitive material, foaming material, light-emitting material or the like and a functionally corresponding detecting means.

Concerning the above functional materials, there is known a data-reading method using a substance which selectively absorbs light having a specific wavelength, and various methods have been proposed which use near infrared light absorbers. For example, JP-B-46-25288 discloses a method which comprises forming characters and/or an image from a dyestuff whose reflectance to near infrared light differs and passing a medium of characters and/or image through a filter which is permeable to light having a wavelength of not less than 650 nm. JP-A-58-134782 discloses a method which comprises disposing at least two dyestuffs whose reflectances to near infrared light differ or laminating these dyestuffs, or a method which comprises covering data of these dyestuffs with an ink which is permeable to near infrared light and then printing. JP-A-59-138284 discloses an identification method using a phthalocyanine dyestuff which absorbs near infrared light JP-A-61-146589 discloses a method of printing a near infrared light-absorbing substance on certificates for securities, etc. by thermal transfer JP-A-61-297192 discloses a method which uses a combination of a magnetic recording layer, an infrared light reflection layer and an infrared light absorption layer. JP-A-63-91283 and JP-A-63-92486 disclose a method using a dyestuff which reflects near infrared light and a dyestuff which absorbs the near infrared light. JP-B-63-144075 discloses a method of overcoating a dark ink on a near infrared light-absorbing ink layer. JP-A-63-30799 discloses a method of forming negative and positive images from two inks whose characteristics for absorption of near infrared light differ from each other. JP-A-64-30788 discloses a method using a near infrared light absorber of a phthalocyanine type in a thermal transfer ribbon.

In recent years, control systems using bar codes such as physical distribution control, product control, material control, inventory control and POS system have been developed, and applied to various fields as means of obviating complicated key inputting and book keeping. The procedure for marking bar codes are classified into a source marking procedure with which to produce a large number of identical bar codes and an in-store marking, in-house marking or on demand marking procedure with which to produce a limited amount of individual bar codes. The former procedure is carried out by an offset printing, gravure printing, flexographic press printing, relief printing, or screen printing method. The latter procedure is carried out by using a printer of a thermal transfer, thermal coloring or wire dot type, an ink-jet printer, a laser printer, or the like. Data processing is usually carreid out as follows. Printed bar code or character data is measured for its reflective strength by means of a light source such as a 632.8 nm He-Ne laser, a 660 nm light-emitting diode, a 670 nm visible light laser diode, a 690 nm light-emitting diode, a 780 nm laser diode, a 940 nm infrared-emitting diode, or the like, inputted as coded data or character data, and processed with a computer.

In general, inks used to print these bar code and character data contain, as a dyestuff, a carbon black having absorption in a wide range from a visible light region to a near infrared light region. And, due to bar code designing or in order to improve product evaluation, a study is made of the following inks or materials: dark (brown, dark blue, dark green, etc.) chromatic color inks containing carbon black in combination, blue or green pirgment-containing inks for detection with a 600 to 700 nm light source, thermal coloring paper using light-emission of a leuco dye, nigrosine type dye-containing inks for an ink-jet printer; and the like.

These inks or materials for any use are required to have sufficient absorption characteristics in the wavelength region of a light source with which to detect data. In particular, the selection of light absorbers for specific wavelength is essential to determine color indication on hue, saturation and brightness, detection sensitivity or weatherability of data-written medium.

For inks containing a so-called near infrared light absorber which absorbs near infrared light, a comparatively colorless transparent substance can be selected, since they have absorption maximum wavelength outside the visible light region. For example, it is known that a phthalocyanine, naphthalocyanine, metal complex, anthraquinone, cyanine or polymetyne type substance is selected.

When these near infrared absorbers are used, no absorption occurs in the visible light region, and therefore, even the combined use thereof with other chromatic color dyestuff does not change the brightness, hue, saturation, etc., of the dyestuff itself. However, when an attempt is made to detect light absorption at a 600 to 700 nm, so-called visible light, wavelength region in order to read coded data or character data, it has been impossible to produce a data-written medium of any color other than blue or green, since the absorber itself has its own color.

On the other hand, in recent years, bar code readers increasingly use a 600 to 700 nm visible light wavelength region, since shorter wavelength can be increasingly used for detection, and the sensitivity of a detection device is increased with the development in a laser diode, a gas laser or a charge coupled device.

In view of the above problems, the present inventors have made a study to achieve the following characteristics of an absorber to be used in the 600 to 700 nm visible light region.
1) The absorber is required to have sufficient absorption in the 600 to 700 nm wavelength region.
2) The absorber is required to exhibit lower absorption of light in a 400 to 600 nm wavelength region.
3) The absorber is required to have light resistance higher than that of conventional printing inks.

As a result, the present inventors have found that a data-written medium which can have a variety of colors usable with a conventional bar code reader or an optical character reader can be obtained by using 0.1 g/m², in an ink layer, of a chromatic color dyestuff having substantial absorption at 600 to 700 nm in combination with other dyestuff.

It is an object of this invention to provide a data-written medium which has an ink layer having a variety of colors and a form according to data and whose data can be read with a light source having a main wavelength at 600 to 700 nm.

It is another object of this invention to provide a data-written medium having bar code or character data having a variety of colors.

It is further another object of this invention to provide a data-written medium having a warm color, whose data can be read with a light source having a main wavelength at 600 to 700 nm.

It is yet another object of this invention to provide a bright-colored data-written medium, whose data can be read with a light source having a main wavelength at 600 to 700 nm.

Further, it is another object of this invention to provide a data-written medium having at least two kinds of variously colored data in one place, whose data can be individually read.

According to this invention, there is provided a data-written medium whose data are readable with a light source having a wavelength of 600 to 700 nm, the medium comprising a substrate and an ink layer encoding the data and containing not more than 0.1 g/m² of a chromatic color dyestuff absorbing substantially in the wavelength range of 600 to 700 nm and at least one other dyestuff, which is at least one of red, orange, yellow and purple dyestuffs. The ink layer is typically formed on the substrate so as to have a form according to the data. Thus, the ink layer may be formed from a heat-melting ink by a thermal transfer method. The ink layer may also be formed by laminating an ink layer containing a chromatic color dyestuff and an ink layer containing said at least one other dyestuff.

Further, according to this invention, there is provided a medium of the invention wherein another ink layer is present which contains a substance absorbing substantially in the near infrared wavelength region, each of the two ink layers individually encodes data and the data are readable with light sources having a main wavelength of 600 to 1,500 nm.

The data are typically encoded as a bar code or as characters.

The larger the content of a dyestuff which has substantial absorption at 600 to 700 nm is, the higher the absorption is, and the reading sensitivity of written data increases. As can be easily assumed, however, as the above content increases, the density and visual sensitivity of data increase. In particular, when the above dyestuff is used in combination with other dyestuff, the brightness, hue and saturation of written data sharply decrease. And, there is a defect that written data shows so-called turbidity to a great extent. Therefore, when the above dyestuff is used in combination with other dyestuff to produce a warm color bar code or character data of e.g. red, orange or yellow the amount of such a dyestuff (which has substantial absorption at 600 to 700 nm) is preferably not more than 0.1 g/m², more preferably 0.08 g/m² to 0.005 g/m². When this amount exceeds 0.1 g/m², the turbidity of the resultant written data increases. When this amount is less than 0.005 g/m², the detection sensitivity of the resultant data medium decreases.

The amount of an ink to form the ink layer depends on kind of the ink, concentration of the dyestuff or printing method. In general, the amount of the ink is 1 to 15 g/m², preferably 10 g/m² for a thermal transfer ribbon, and 0.1 to 2 g/m² for offset printing.

Examples of the chromatic dyestuff having substantial absorption at 600 to 700 nm, used in this invention, are purple dyestuffs typified by inorganic pigments such as Manganese Violet, Cobalt Violet Deep and Cobalt Violet Light, azo pigments such as Fast Violet B; basic dye type lakes such as Methyl Violet Lake and Rhodamine B lake, and vat dye type pigments such as Dioxazine Violet, Indanthrene Brilliant Violet and Indanthrene Red Violet; blue dyestuffs typified by inorganic pigments such as Ultramarine, Prussian Blue, Cobalt Blue and Cerulean Blue, acidic dye type lakes such as Alkali Blue Lake and Peacock Blue, basic dye type lakes such as Victorial Blue Lake, phthalocyanine pigments such as Phthalocyanine Blue, Fast Sky Blue and Heliogen Blue G and vat dye type pigments such as Indigo and Indanthrene Blue BC; and green dyestuffs typified by inorganic pigments such as Chrome Green, Zinc Green, Chromium Oxide, Veridian, Emerald Green and Cobalt Green, nitroso pigments such as Pigment Green B and Naphthol Green B, azo pigments such as Green Gold, acid dye type lakes such as Acid Green Lake, and basic dye type lakes such as Malachite Green Lake. These dyestuffs are used alone or in combination. Blue and green dyestuffs are preferred. These dyestuffs have absorption at 600 to 700 nm to such an extent that data can be detected.

As a chromatic dyestuff having substantial absorption at 600 to 700nm, halogenated copper phthalocyanine is preferred, and in particular, brominated copper phthalocyanine is the most preferred. In general, in the phthalocyanine green pigment, the benzene ring of its phthalocyanine is halogenated, and at this time, the halogenation degree or the kind of halogen is changed, whereby its main absorption wavelength shifts to a longer wavelength side. Thus, its color indication can be adjusted. And, chlorine or bromine is usually used as a halogen, and the use of bromine rather than chlorine gives a shift to a longer wavelength side and changes green from a blueish color to a yellowish color. In particular, when the dyestuff is combined with other dyestuff to form a bar code, etc., of a warm color such as red, orange, yellow, etc., yellowish green as a hue is free from turbidity to a higher extent than blueish green.

In this invention, the at least one other dyestuff means a dyestuff which does not have main absorption at 600 to 700 nm. The at least one other dyestuff can be pastel, fluorescence, metallic and pearl. The at least one other dyestuff which is a warm color dyestuff is at least one of red, orange, yellow and purple dyestuffs. These dyes and pigments may be used alone or in combination as the above other dyestuff. In this invention, bar code, etc., can be imparted with such a variety of colors.

Therefore, the data-written medium of this invention can be applied to cards, tickets and certificates to a greater extent than conventional media using a dark color ink.

The data of the above data-written medium are readable by measuring the reflection strength, transmission strength or absorption strength of a light source having a wavelength of 600 to 700 nm. Typically, this is determined by means of a detector using a light source having a main wavelength of 600 to 700 nm.

Further, this invention provides a data-written medium having data formed of an ink layer containing a chromatic dyestuff having absorption at 600 to 700 nm and other dyestuff and another data of another ink layer containing a dyestuff having absorption in near infrared region. This data-written medium is measured for reflection strength, transmission strength or absorption strength of each of the above two layers by means of a detector using a plurality of light sources having a main wavelength of 600 to 1,500 nm, whereby data can be individually read.

As the above light soruce, a light source having a single wavelength is preferred, and a laser is advantageously used. Further, the light absorbers is required to have a maximum absorption peak at a wavelength of light used for the detection, and half width of absorption spectrum is required to be as small as possible, whereby mutual interference of absorption spectra decreases, and detection accuracy increases. In order to achieve this, it is necessary to disperse a dyestuff having absorption at 600 to 700 nm as fully as possible or bring it into an almost complete solution state. Then, a sharp absorption spectrum and a small half width can be obtained. Further, the amount of such a dyestuff can be decreased. Therefore, the dispersion state of the above dyestuff is important.

The ink for the ink layer of this invention may be a printing ink or an ink for a variety of printers. Examples of such an ink are printing inks such as gravure ink, flexographic press ink, offset printing ink, screen ink, relief printing ink and inks for thermal transfer, ink-jet, impact, laser and some other printers.

When at least two inks are used for a multiple code according to this invention, a plurality of writing methods can be used. For example, first data is written, e.g. with a thermal printer, and a second data is then printed.

The following is one embodiment using a transfer ribbon for a thermal printer.

The transfer ribbon is used as follows. The transfer ribbon, which is produced by forming a heat-melting ink layer on one surface of a base film as a substrate, is attached to a receptor sheet, and while these two members are in such an attached state, the heat melting ink layer is melted and transferred by applying a heating means such as a thermal head to the other surface of the substrate, whereby character or image data according to data provided to the heating means is transferred to the receptor sheet.

Known materials are used as materials for such a transfer ribbon. Examples of the base film as a substrate are polyester films such as polyethylene terephthalate and polyethylene naphthalate films; polyamide films such as nylon, polyolefin films such as a polypropylene film, cellulose films such as a triacetate film; polycarbonate films, and the like. Of these films, a polyester film is the most preferred, since it is excellent in heat resistance, mechanical strength, tensile strength and tensile stability. A base film having a smaller thickness shows higher thermal conductivity. In view of coatability of the ink layer, however, the thickness of the base film is preferably 3 to 50 µm. The substrate or base film may be provided with aback coating on the surface other than the surface having the heat-melting ink layer.

The ink for the heat-melting ink layer is prepared by using a wax and a thermoplastic resin as a main vehicle, and as a wax, those having a melting point of 50 to 100°C, preferably 50 to 90°C are used. The wax is grouped into a natural wax and a synthetic wax. Examples of the natural wax are waxes of plant origin such as candelilla wax, carnauba wax, rice wax, haze wax and jojoba oil waxes of animal origin such as bees wax, lanolin and spermaceti wax; waxes of mineral origin such as montan wax, ozokerite and ceresine; and waxes of petroleum origin such as paraffin wax, microcrystalline wax, petrolatum; and examples of the synthetic wax are synthetic hydrocarbons such as Fischer-Tropsch wax and polyethylene wax; modifed waxes such as montan wax derivatives, paraffin wax derivatives and microcrystalline wax derivatives; hydrogenated waxes such as hardened castor oil, and fatty acids such as lanolic acid, palmitic acid, myristic acid, stearic acid and 1,2-hydroxystearic acid. The thermoplastic resin has a softening point of not more than 200°C, preferably not more than 180°C. Examples of the thermoplastic resin are polyvinyl chloride, polyvinyl acetate, vinyl chloride-vinyl acetate copolymer, polyethylene, polypropylene, polyacetal, ethylene-vinyl acetate copolymer, ethylerie-ethyl acrylate copolymer, polystyrene, polyamide, ethyl cellulose, epoxy resin, xylene resin, ketone resin, petroleum resin, rosin or its derivative, cummaron-indene resin, terpene resin, polyurethane resin, polyvinyl butyral, synthetic rubbers such as styrene-butadiene rubber, nitrile rubber, acryl rubber, ethylene-propylene rubber.

Further, the following additives may be incorporated: flexibilizers such as oil, weatherability improvers such as an ultraviolet light absorber, a radical polymerization inhibitor and a peroxide disintegrating agent, and a filler. The heat-melting ink is obtained by dispersing or disolving chromatic color dyestuff which has substantial absorption at 600 to 700nm in a vehicle of the above material. The ink layer is formed on a substrate by a hot melt coating method. More preferably, the ink layer is formed by a solvent coating method, in which the above material is dissolved in a solvent to form a coating solution, and the coating solution is coated on a substrate. The resultant coated film is subjected to thermal transfer using, e.g. a thermal transfer printer to form a data-written medium. The multiple bar code is also obtained by further printing data on the data-written medium obtained above.

The data-written medium of this invention which contains a specific amount of the specific dyestuff has the following various functions and effects.

A bright-color bar code which has not been possible can be produced. Therefore, it is conveniently used in assortment of products for grade, region, size and makers. It is free from a limitation imposed by a design.

It can be used in combination with a system using a near infrared absorber having almost no absorption in a visible light region, and detected in near infrared region with a 780 nm laser diode or 940 nm infrared LED. Even if two kinds of bar codes are printed one on the other, data of these bar codes can be individually read. For example, a color bar code printed on a transparent bar code of a near infrared absorber conceals the printed transparent bar code and at the same time functions as a false bar code. Hence, it has an improved function of preventing falsification. Therefore, the data-written medium of this invention can essentially overcome the problems of conventional media.

This invention will be explained further in detail below by reference to Examples, in which "part" stands for "part by weight".

The following inks A to E and G were prepared by dispersing components shown below with an attriter at room temperature for a period of time shown below. Further, a hot melt ink F was pepared by fully kneading components below with a three-roll mill heated at 90 to 120°C for a period of time shown below.

### Dispersing or kneading time:

| Ink | A | B | C | D | E | F | G |
|---|---|---|---|---|---|---|---|
| Dispersing or kneading time (hr.) | 1 | 1 | 2 | 3 | 3 | 3 | 2 |

### Components for ink:

| Ink A | |
|---|---|
| Carnauba wax | 18 parts |
| Ethylene-vinyl acetate copolymer (Evaflex 420, supplied by Mitsui Polychemical Co., Ltd.) | 2 parts |
| IPA (isopropanol) | 15 parts |
| Toluene | 65 parts |

| Ink B | |
|---|---|
| Fluorescent pigment pink (Epocolor FP-112, supplid by Nippon Shokubai Kagaku Kogyo) | 10 parts |
| Alicyclic saturated hydrocarbon resin (Arkon P-100, supplied by Arakawa Chemical Co., Ltd.) | 5 parts |
| Carnauba wax | 5 parts |
| IPA | 15 parts |
| Toluene | 65 parts |

| Ink C | |
|---|---|
| Cinnabar red pigment (Lake Red CN Conc, supplied by Toyo Ink Manufacturing Co., Ltd.) | 5 parts |
| Alicyclic saturated hydrocarbon resin (Arkon P-100" supplied by Arakawa Chemical Co., Ltd.) | 7.5 parts |
| Carnauba wax | 7.5 parts |
| IPA | 15 parts |
| Toluene | 65 parts |

| Ink D | |
|---|---|
| Brominated copper phthalocyanine (Lionol Green 6YK, supplied by Toyo Ink Manufacturing Co., Ltd.) | 1.5 parts |
| Alicyclic saturated hydrocarbon resin (Arkon P-100, supplied by Arakawa Chemical Co., Ltd.) | 9.5 parts |
| Carnauba wax | 10 parts |
| IPA | 15 parts |
| Toluene | 64 parts |

| Ink E | |
|---|---|
| Chlorinated copper phthalocyanine (Lionol Green B-201, supplied by Toyo Ink Manufacturing Co., Ltd.) | 1.5 parts |
| Alicyclic saturated hydrocarbon resin (Arkon P-100, supplied by Arakawa Chemical Co., Ltd.) | 9.5 parts |
| Carnauba wax | 10 parts |
| IPA | 15 parts |
| Toluene | 64 parts |

| Ink F | |
|---|---|
| Carbon black (Carbon MA-600, supplied by Mitsubishi Chemical Industries Ltd) | 0.7 part |
| Ethylene-vinyl acetate copolymer (Evaflex 420, supplied by Mitsui Polychemical Co., Ltd) | 5.0 parts |
| Carnauba wax | 35.3 parts |
| Praffin wax | 59.0 parts |

| Ink G | |
|---|---|
| Near infrared light absorber having the following structure. | 1.5 parts |
| Alicyclic saturated hydrocarbon resin (Arkon P-90, supplied by Arakawa Chemical Co., Ltd.) | 9.5 parts |
| Rice wax | 10 parts |
| IPA | 15 parts |
| Toluene | 64 parts |

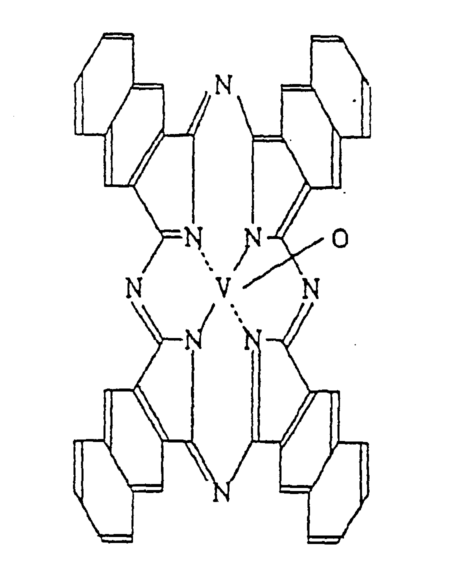

The following thermal transfer ribbons were prepared from the above inks as described below. A polyethylene terephthalate film having a thickness of 6 µm was used as a substrate. The inks A to E and G were applied by a gravure coating method, and the ink F by a hot melt coating method.

### Ribbon 1

One g/m² of the ink A and 3 g/m² of the ink B were applied to give a pink, thermal transfer ribbon.

### Ribbon 2

One g/m² of the ink A and 3 g/m² of the ink C were applied to give a cinnabar red, thermal transfer ribbon.

### Ribbon 3

One g/m² of the ink A, 2 g/m² of the ink B and 0.4 g/m² of the ink D were applied to give a fluorescent pink, thermal transfer ribbon.

### Ribbon 4

One g/m² of the ink A, 2 g/m² of the ink C and 0.4 g/m² of the ink D were applied to give a cinnabar red, thermal transfer ribbon.

### Ribbon 5

One g/m² of the ink A, 2 g/m² of the ink B and 0.6 g/m² of the ink E were applied to give a fluorescent pink, thermal transfer ribbon.

### Ribbon 6

One g/m² of the ink A, 2 g/m² of the ink C and 0.6 g/m² of the ink E were applied to give a cinnabar red, thermal transfer ribbon.

### Ribbon 7

One g/m² of the ink A, 0.3 g/m² of the ink G and 2 g/m² of the ink A were applied to give a nearly transparent, thermal transfer-ribbon.

### Ribbon 8

One g/m² of the ink A, 2 g/m² of the ink B and 0.6 g/m² of the ink F were applied to give a grayish cinnabar red, thermal transfer ribbon.

### Examples 1 - 4

The ribbons 3, 4, 5 and 6 were used to write data according to a bar code pattern "Code 39" with a bar code printer (B-30-S1, supplied by Tokyo Denki), whereby color bar codes were obtained as data-written media of Examples 1 to 4. The resultant color bar code prints were slightly turbid, but had color indication of nearly complete reproduction of original color tones. These data-written media were read with a bar code reader (TCD-4000 & TBR-4000, using CCD as a senser, supplied by Token) to show that data was codewise readable.

### Comparative Examples 1 - 3

The above procedure was repeated by using the ribons 1 and 2. The resultant data-written media could not be read with the above bar code reader. Further, the above procedure was repeated by using the ribbon 8. The resultant data-written medium was readable with a bar code reader. However, this medium had clearly poor color indication.

### Example 5

The ribbons 5 and 7 were used to write different data in one place according to "Code 39" to obtain a data-written medium. The data formed from the ribbon 5 was read with a bar code detector using a 632.8 nm He-Ne laser as a light source (Lasercheck LC2811, supplied by Symbol Technologies, Inc.), and the data formed from the ribbon 7, with a bar code reader (THLS-6000 & TBR-6000, using a 780 nm laser as a light source, supplied by Token). These data were all readable codewise.

### Comparative Example 4

The ribbons 8 and 7 were used to write different data in one place in the same way as in Example 5. The data formed from the ribbon 8 could be read. However, data formed from the ribbon 7 was not readable.

### Example 6

The following cmponents were dispersed fully with an attriter at room temperature to prepare inks H and J.

| Ink H | |
|---|---|
| Carnauba wax | 18 parts |
| Ethylene vinyl acetate copolymer (Evaflex 420, supplied by Mitsui Polychemical Co., Ltd) | 2 parts |
| IPA (isopropanol) | 15 parts |
| Toluene | 65 parts |

| Ink J | |
|---|---|
| C. I. Pigment Violet 1 (Ultrarose 3B, supplied by Toyo ink Manufacturing Co., Ltd.) | 1.5 parts |
| Alicyclic saturated hydrocarbon resin (Arkon P-100, supplied by Arakawa Chemical Co., Ltd.) | 9.5 parts |
| Carnauba wax | 10 parts |
| IPA | 15 parts |
| Toluene | 64 parts |

Further, the following components were fully kneaded with a three-roll mill heated to 90 to 120°C to prepare a hot melt ink K.

| Ink K | |
|---|---|
| Fluroescent pigment pink (Epocolor FP-10, supplied by Nippon Shokubai Kagaku Kogyo) | 20 parts |
| Ethylene-vinyl acetate copolymer (Evaflex 577-2, supplied by Mitsui Polychemical Co., Ltd.) | 5 parts |
| Carnauba wax | 16 parts |
| Paraffin wax (HNP-9, supplied by Nippon Seiro) | 59 parts |

The ink H was applied to a 6 µm thick polyethylene terephthalate film with a gravure printing machine such that the dried film amount was 1 g/m². And, the ink K was applied thereon with a hot melt coater such that its dried film amount was 3 g/m². Further, the ink J was applied thereon with a gravure printing machine such that the dried film amount was 1 g/m² to prepare a pink, thermal transfer ribbon.

A bar code pattern was printed by using the thermal transfer ribbon to give a pink, data-written medium, although its color was slightly turbid. When this medium was read with a bar code detector having a reading wavelength of 632.8 nm (Lasercheck LC2811, supplied by Symbol Technologies Inc.), data was codewise readable.

### Comparative Example 5

The ink H was applied to a 6 µm thick polyethylene terephthalate film with a gravure printing machine such that its dried film amount was 1 g/m², and the ink J was applied thereon with a hot melt coater such that its dried film amount was 3 g/m² to prepare a pink, thermal transfer ribbon.

A bar code pattern was printed by using the thermal transfer ribbon to give a brightly pink data-written medium. However, data was not readable with a bar code detector having a reading wavelength of 632.8 nm.

### Example 7

A varnish was prepared by heating a coating solution of the following composition to 200°C to dissolve the resin.

| Rosin-modified phenolic resin varnish | |
|---|---|
| Rosin-modified phenolic resin (Tamanol 356, supplied by Arakawa Chemical Co., Ltd.) | 50 parts |
| Linseed oil | 15 parts |
| Solvent (No. 3 solvent, supplied by Nippon Petrochemical) | 35 parts |

Then, the following components were kneaded with a three-roll mill to prepare an ink L.

| Ink L | |
|---|---|
| C. I. Pigment Green 8 (Sumitone Green B, supplied by Sumitomo Chemical Co., Ltd.) | 4.3 parts |
| C. I. Pigment Red 38 (Lionol Red B, supplied by Toyo Ink Manufacturing Co., Ltd.) | 13 parts |
| Rosin-modified phenolic resin varnish | 68 parts |
| Solvent (No. 3 solvent, supplied by Nippon Petrochemical) | 14.7 parts |

A bar code was printed on art paper by an offset printing method such that its dried film amount was 1 g/m², whereby a slightly darkish red, data-written medium was obtained. Data was codewise readable with a bar code detector having a reading wavelength of 632.8 nm.

### Comparative Example 6

The following components were kneaded with a three-roll mill to prepare an ink M.

| Ink M | |
|---|---|
| C. I. Pigment Red 38 (Lionol Red B, supplied by Toyo Ink Manufacturing Co., Ltd.) | 15 parts |
| Rosin-modified phenolic resin varnish | 70 parts |
| Solvent (No. 3 solvent, supplied by Nippon Petrochemical) | 15 parts |

A bar code was printed on art paper by an offset printing method such that its dried film amount was 1 g/m², whereby a red data-written medium was obtained. Data was not readable with a bar code detector having a reading wavelength of 632.8 nm.

### Example 8

The following coating solutions were fully dispersed with an attriter at room temperature to prepare inks N and O.

| Ink N | |
|---|---|
| Fluorescent pigment pink (Epocolor FP-10, supplied by Nippon Shokubai Kagaku Kogyo) | 10 parts |
| Alicyclic saturated hydrocarbon resin (Arkon P-100, supplied by Arakawa Chemical Co., Ltd.) | 5 parts |
| Carnauba wax | 5 parts |
| IPA | 15 parts |
| Toluene | 65 parts |

| Ink O | |
|---|---|
| C.I. Pigment Blue 1 (Ultrablue B, supplied by Toyo Ink Manufacturing Co., Ltd.) | 1.5 parts |
| Alicyclic saturated hydrocarbon resin (Arkon P-100, supplied by Arakawa Chemical Co., Ltd.) | 9.5 parts |
| Carnauba wax | 10 parts |
| IPA | 15 parts |
| Toluene | 64 parts |

The ink H was applied to a 6 µm thick polyethylene terephthalate film with a gravure printing machine such that its dried film amount was 1 g/m², and the ink N was applied thereon such that its dried film amount was 3 g/m². Further, the ink O was applied thereon such that its dried film amount was 1 g/m² to prepare a pink, thermal transfer ribbon.

A bar code pattern was printed by using the thermal transfer material to give a slightly turbid pink data-written medium. However, data was codewise readable with a bar code detector having a reading wavelength of 632.8 nm.

### Comparative Example 7

The following components were fully dispersed with an attriter at room temperature to prepare an ink P.

| Ink P | |
|---|---|
| Carbon black (MA-600, supplied by Mitsubishi Chemical Industries Ltd) | 0.7 part |
| Alicyclic saturated hydrocarbon resin (Arkon P-100, supplied by Arakawa Chemical Co., Ltd. | 10.3 parts |
| Carnauba wax | 10 parts |
| IPA | 15 parts |
| Toluene | 64 parts |

The ink H was applied to a 6 µm thick polyethylene terephthalate film with a gravure printing machine such that its dried film amount was 1 g/m², and the ink N was applied thereon such that its dried film amount was 3 g/m². Further, the ink P was applied thereon such that its dried film amount was 1 g/m² to prepare a greyish pink, thermal transfer ribbon.

A bar code pattern was printed by using the thermal transfer ribbon to give a data-written medium. Data was codewise readable with a bar code detector having a reading wavelength of 632.8 nm.However, this medium had turbid and poor color indication.

### Example 9

The following components were fully dispersed with an attriter at room temperature to prepare an ink Q.

| Ink Q | |
|---|---|
| Alicyclic saturated hydrocarbon resin (Arkon P-100, supplied by Arakawa Chemical Co., Ltd. | 10 parts |
| Carnauba wax | 10 parts |
| Near infrared absorber (PRO-JET IR SC101756, supplied by ICI Japan) | 0.2 part |
| IPA | 14.8 parts |
| Toluene | 65 parts |

The ink H was applied to a 6 µm thick polyethylene terephthalate film with a gravure printing machine such that its dried film amount was 1 g/m², and the ink Q was applied thereon such that its dried film amount was 1 /m². Further, the ink H was applied thereon such that its dried film amount was 2 g/m² to prepare a nearly transparent, thermal transfer ribbon.

Two diffrent data were printed in one place by using the above thermal transfer ribbon and the transfer ribbon obtained in Example 8 to give a dual bar code (dual data-written) medium. When this medium was read with a bar code reader haing a reading wavelength of 780 nm (TBR-6000, supplied by Token), data was readable accrding to the code formed of the thermal transfer ribbon of this Example. Further, when the medium was read with a bar code detector having a reading wavelength of 632.8 nm, data was readable according to the codes formed of the transfer ribbon of Example 8.

### Comparative Example 8

The thermal transfer ribbon of Comparative Example 7 and the thermal transfer ribbon of Example 9 were used to print two different data in one place, whereby a data-written medium of a dual bar code was obtained. When this medium was read with a bar code detector having a reading wavelength of 632.8 nm, data according to the code formed of the thermal transfer ribbon of Comparative Example 7 was readable. When this medium was read with a bar code reader having a reading wavelength of 780 nm, data according to the code formed of the thermal transfer ribbon of Example 9 was not readable.

## Claims

1. A data-written medium the data of which are readable with a light source having a wavelength of 600 to 700 nm, the medium comprising a substrate and an ink layer encoding the data and containing not more than 0.1 g/m² of a chromatic colour dyestuff absorbing substantially in the wavelength range of 600 to 700 nm and at least one other dyestuff, which is at least one of red, orange, yellow and purple dyestuffs.

2. The medium according to claim 1, wherein the data are encoded as a bar code.

3. The medium according to claim 1, wherein the data are encoded as characters.

4. The medium according to any one of the preceding claims, wherein the dyestuff is a dye or a pigment.

5. The medium according to any one of the preceding claims, wherein the amount of chromatic colour dyestuff in the ink layer is 0.005 g/m² to 0.08 g/m².

6. The medium according to any one of the preceding claims, wherein the ink layer has been formed from a heat-melting ink by a thermal transfer method.

7. The medium according to any one of the preceding claims, wherein the chromatic colour dyestuff is a blue or green dyestuff.

8. The medium according to claim 7, wherein the chromatic colour dyestuff is a halogenated copper phthalocyanine.

9. The medium according to claim 8, wherein the halogenated copper phthalocyanine is a brominated copper phthalocyanine.

10. The medium according to any one of the preceding claims of which the data are readable by measuring the reflection strength, transmission strength or absorption strength of the light source.

11. The medium according to any one of the preceding claims, wherein the ink layer is formed by laminating an ink layer containing a chromatic colour dyestuff and an ink layer containing said at least one other dyestuff.

12. The medium according to claim 1, wherein another ink layer is present which contains a substance absorbing substantially in the near infrared wavelength region, each of the two ink layers individually encodes data and the data are readable with light sources having a main wavelength of 600 to 1,500 nm.

## Patentansprüche

1. Datenbeschriebenes Medium, dessen Daten mit einer Lichtquelle im Wellenlängenbereich von 600 bis 700 nm lesbar sind, wobei das Medium ein Substrat und eine Tintenschicht umfaßt, in der die Daten kodiert sind und die nicht mehr als 0,1 g/m² eines chromatischen Farbstoffs enthält, der im wesentlichen in einem Wellenlängenbereich von 600 bis 700 nm absorbiert, und mindestens einen weiteren Farbstoff, der mindestens einer von einem roten, orangen, gelben und violetten Farbstoff ist.

2. Medium nach Anspruch 1, wobei die Daten als ein Strichcode kodiert sind.

3. Medium nach Anspruch 1, wobei die Daten als Schriftzeichen kodiert sind.

4. Medium nach einem der vorangehenden Ansprüche, wobei der Farbstoff eine Farbe oder ein Pigment ist.

5. Medium nach einem der vorangehenden Ansprüche, wobei die Menge an chromatischem Farbstoff in der Tintenschicht 0,005 g/m² bis 0,08 g/m² beträgt.

6. Medium nach einem der vorangehenden Ansprüche, wobei die Tintenschicht aus einer heißschmelzenden Tinte mittels eines Wärmetransfer-Verfahrens gebildet wird.

7. Medium nach einem der vorangehenden Ansprüche, wobei der chromatische Farbstoff ein blauer oder grüner Farbstoff ist.

8. Medium nach Anspruch 7, wobei der chromatische Farbstoff ein halogeniertes Kupferphthalocyanin ist.

9. Medium nach Anspruch 8, wobei das halogenierte Kupferphthalocyanin ein bromiertes Kupferphthalocyanin ist.

10. Medium nach einem der vorangehenden Ansprüche, dessen Daten durch Messen des Reflexionsgrads, des Transmissionsgrads und des Absorptionsgrads des Lichts lesbar sind.

11. Medium nach einem der vorangehenden Ansprüche, wobei die Tintenschicht durch Aufeinanderschichten einer Tintenschicht, enthaltend einen chromatischen Farbstoff, und einer Tintenschicht, enthaltend mindestens einen anderen Farbstoff, gebildet wird.

12. Medium nach Anspruch 1, wobei eine andere Tintenschicht vorhanden ist, die eine im wesentlichen im nahen Infrarot-Wellenlängenbereich absorbierende Substanz enthält, wobei jede der beiden Tintenschichten einzeln Daten kodiert und die Daten mit Lichtquellen mit einer Hauptwellenlänge von 600 bis 1.500 nm lesbar sind.

## Revendications

1. Un support de données écrites dont les données peuvent être lues au moyen d'une source de lumière ayant une longueur d'onde de 600 à 700 nm, le support comprenant un substrat et une couche d'encre codant les données et contenant un maximum de 0,1 g/m² d'une matière colorante chromatique absorbant essentiellement dans la gamme de longueurs d'onde de 600 à 700 nm et au moins une autre matière colorante, qui est au moins une des matières colorantes rouge,orangé, jaune et pourpre.

2. Le support selon la revendication 1, dans lequel les données sont codées sous la forme d'un code à barres.

3. Le support selon la revendication 1, dans lequel les données sont codées sous forme de caractères.

4. Le support selon l'une des revendications précédentes, dans lequel la matière colorante est un colorant ou un pigment.

5. Le support selon l'une des revendications précédentes, dans lequel la quantité de matière colorante chromatique contenue dans la couche d'encre est comprise entre 0,005 g/m² et 0,08 g/m².

6. Le support selon l'une des revendications précédentes, dans lequel la couche d'encre a été formée à partir d'une encre thermofusible par un procédé de transfert thermique.

7. Le support selon l'une des revendications précédentes, dans lequel la matière colorante chromatique est une matière colorante bleue ou verte.

8. Le support selon la revendication 7, dans lequel la matière colorante chromatique est une phtalocyanine de cuivre halogénée.

9. Le support selon la revendication 8, dans lequel la phtalocyanine de cuivre halogéné est une phtalocyanine de cuivre bromée.

10. Le support selon l'une des revendications précédentes, dont il est possible de lire les données en mesurant le pouvoir de réflexion, le pouvoir de transmission ou le pouvoir d'absorption de la source de lumière.

11. Le support selon l'une des revendications précédentes, dans lequel la couche d'encre est formée par application d'une couche d'encre contenant une matière colorante chromatique et d'une couche d'encre contenant l'autre matière colorante.

12. Le support selon la revendication 1, dans lequel est présente une autre couche d'encre qui contient une substance absorbant essentiellement dans la gamme des longueurs d'onde du proche infrarouge, chacune des deux couches d'encre code individuellement les données et les données peuvent être lues au moyen de sources de lumière ayant une longueur d'onde principale de 600 à 1 500 nm.
